## Europäisches Patentamt
## European Patent Office
## Office européen des brevets

(19)

(11) Publication number: **0 223 522**
**B1**

# EUROPEAN PATENT SPECIFICATION

(12)

(45) Date of publication of the patent specification:
25.04.90

(51) Int. Cl.⁴: **B60J 3/02**

(21) Application number: 86308690.6

(22) Date of filing: 07.11.86

(54) Visor system.

(30) Priority: 07.11.85 US 796090

(43) Date of publication of application:
27.05.87 Bulletin 87/22

(45) Publication of the grant of the patent:
25.04.90 Bulletin 90/17

(84) Designated Contracting States:
DE ES FR GB IT

(56) References cited:
DE-U- 1 911 384
DE-U- 8 433 976
FR-A- 2 497 157
US-A- 2 120 892
US-A- 2 681 824

(73) Proprietor: PRINCE CORPORATION, Windcrest Drive,
Holland Michigan 49423(US)

(72) Inventor: Hemmeke, Ronald Lee, A-4274 - 46th Street,
Holland Michigan 49423(US)
Inventor: Spykerman, Scott Alan, 402 West 31st Street,
Holland Michigan 49423(US)

(74) Representative: Robinson, Anthony John Metcalf et al,
Kilburn & Strode 30 John Street, London,
WC1N 2DD(GB)

## Description

The present invention pertains to vehicle visors and particularly to a system with multiple visors.

Typically, automotive visors are installed such that they can pivot from a lowered use position against the windshield (windscreen) or over a side window if the sun is entering the vehicle from the side. When driving along a curved highway, it can be necessary to frequently move the visor from the front to the side while driving. This can not only be burdensome, but, when ducking under the visor as it is moved, the driver's attention is distracted, creating a potentially hazardous driving situation.

In order to provide both side and front window shade, visor systems have been proposed which employ a primary conventional visor and a secondary or auxiliary visor US-A 2 261 881; US-A 2 492 074; US-A 2 517 872; US-A 2 823 950; and US-A 3 499 679 are representative of such structure. In these structures, an auxiliary visor is provided and is coupled directly to the primary visor through a pivot connection such that it can be moved to a variety of locations providing sun blocking along more than one axis of incident sunlight. Other prior art visor systems provide separate side window visors which are permanently mounted above the side windows. US-A 4 468 062 (EP-A 0 098 050) is representative of a side window visor installation.

A known visor system in accordance with the preamble of Claim 1 is known from DE-U 1 911 384.

A difficulty with this visor system is that when both the front a side visors are deployed, a gap is left between them through which a driver of the vehicle could be dazzled. This problem is dealt with in the present invention.

According to the present invention there is provided a visor system as defined in the characterising portion of Claim 1.

The system of the present invention thus provides an improved auxiliary visor system in which, preferably, a pair of spaced mounting brackets support a first visor movable between a raised, stored position and a lowered, use position and one which can be moved to a side window for providing protection against incident light from the side. The brackets may also support an adjustable width auxiliary visor which is pivoted on an axis located above the vehicle's windshield between a raised, stored position and a lowered, use position and include a sliding panel movable laterally along the axis. With such a system, the auxiliary visor can become the primary windshield visor with the sliding panel selectively movable to block light, while the primary visor is moved to the side window position. Alternatively, when only a front visor is necessary, the primary visor can be used independently of the auxiliary visor panel. The system may be relatively compact and may employ a pair of parallel pivot axes which allow storage of the visor system against the vehicle headliner when not in use in a compact and attractive visor installation which has the clean, trim appearance of a single visor installation. Desirably, the adjustable width of the second visor is achieved by means of a sliding panel mounted within a hollow body.

The invention may be carried into practice in various ways, and one specific embodiment will now be described by way of example, with reference to the drawings in which:

Figure 1 is a front elevational view of a passenger side visor installation embodying the present invention shown with both visor panels in a raised, stored position;

Figure 2 is a front elevational view of the structure shown in Figure 1 with the primary visor shown in a lowered, forward windshield use position;

Figure 3 is a front elevational view of the structure shown in Figure 1 shown with the primary visor lowered and pivoted to cover the side window for use in blocking light incident from the side of the vehicle;

Figure 4 is a front elevational view of the structure shown in Figure 1 with the primary visor shown in the position shown in Figure 3 and the auxiliary visor shown in a lowered, use position;

Figure 5 is a front elevational view of the structure shown in Figure 4 with the sliding panel associated with the auxiliary visor extended;

Figure 6 is an enlarged, fragmentary, front elevational view of the auxiliary visor body;

Figure 7 is a front elevational view of the sliding panel associated with the auxiliary visor body shown in Figure 6;

Figure 8 is an enlarged fragmentary cross-sectional view of the lower edge of the auxiliary visor taken along section line VIII-VIII of Figure 6;

Figure 9 is a left side elevational view of the structure shown in Figure 6; and

Figure 10 is a fragmentary, enlarged view of one of the two mounting brackets for the auxiliary visor.

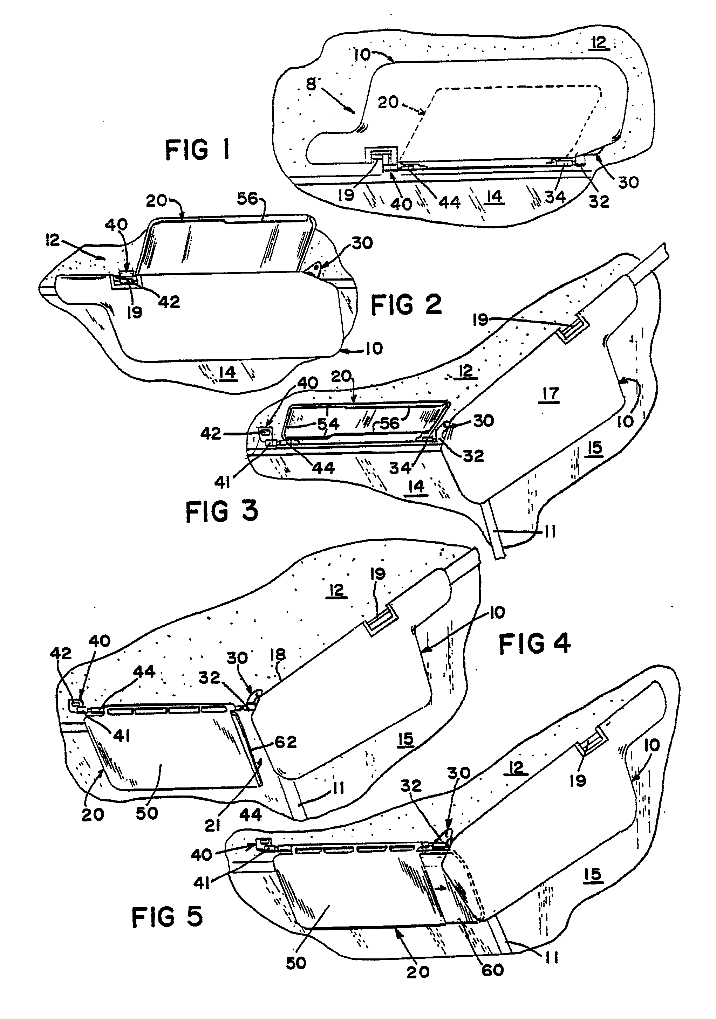

Referring initially to Figures 1-5, there is shown the preferred embodiment of the invention which is shown installed in a vehicle on the passenger side. A visor system 8 comprises a first, or primary, visor 10 and a second, or auxiliary, visor panel 20. Both visors 10 and 20 are coupled between a first mounting bracket 30 and a second mounting bracket 40 which are mounted in spaced relationship to a roof 12 of a vehicle above its windshield (windscreen) 14. In the embodiment shown, the passenger side visor system is mounted to the left of an A-pillar 11 of the vehicle which extends between the windshield 14 and the right side window 15.

As seen in the progression of visor positions, shown in Figures 1-5, the first visor 10 operates in the nature of a conventional visor, movable between a raised, stored position, shown in Figure 1, to a lowered windshield position, as illustrated in Figure 2. The visor can then be moved to a side window blocking position, shown in Figures 3-5. The second, or auxiliary, visor panel 20 can be lowered for use as illustrated in Figures 4 and 5. When both visors 10 and 20 are in a raised, stored position, as illustrated in Figure 1, the auxiliary visor 20 is concealed between visor 10 and roof or headliner 12 of the vehicle, and therefore the system appears substantially the same as a conventional visor installation. Having briefly described the operation of the visor system, a deailed description of the unique visor system is now presented.

The first or primary visor 10 may include an illuminated mirror package of the type described in U.S.-A-4,227,241 or a slide-out illuminated vanity mirror package as described in U.S.-A-4,486,819. Alternatively, the visor can be a standard blank visor as illustrated. Visor 10 includes a polymeric core covered by a suitable upholstery material 17 to conform the visor to the interior decor of the vehicle in which it is installed. A visor pivot rod extends within the visor core adjacent the top edge 18 thereof to permit the visor to pivot on the visor rod for movement between a raised, stored position and a lowered, use position, as illustrated in Figures 1 and 2, respectively. The visor pivot rod and its connection within the body of a visor such as visor 10 is disclosed in detail in U.S.-A-4,500,131. The visor pivot rod provides a pivotal interface between the visor body 10 and the pivot rod extending from an end thereof which is pivotally coupled to the mounting bracket 30.

The bracket 30 includes a cast housing with a central cylindrical aperture for receiving a conventional pivot elbow with the visor pivot rod press-fit through an aperture in one end thereof and an opposite end extending through the aperture in the housing. The pivotal mounting of the elbow within the aperture is provided by a compression spring and locking washer arrangement which is conventional. The visor 10 can thus rotate about the longitudinal axis of the bracket 30 to move between the front windshield and the side window, as illustrated in Figures 2 and 3.

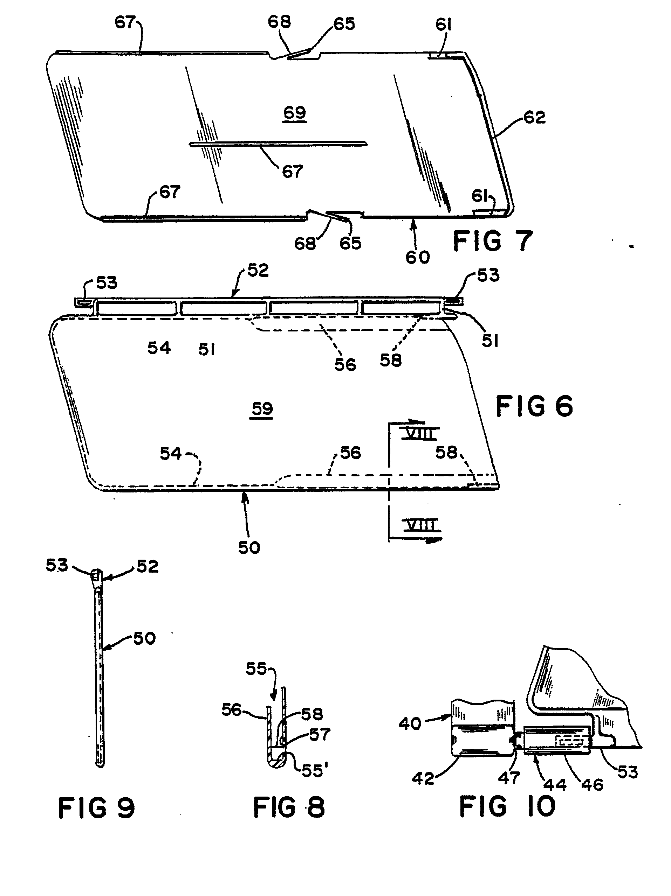

The bracket 30 includes an integrally molded socket 32 extending in angled relationship and offset from the cylindrical aperture for the pivot rod for supporting one end of the auxiliary visor 20 via a pivot coupling 34 which is identical to a coupling 44 which will be described below in connection with Figure 10.

The opposite upper end of the auxiliary visor panel 20 is supported by the mounting bracket 40 which includes a first open cylindrical socket 42, as best seen in Figure 2, for receiving a rod-shaped mounting clip 19 of the visor 10 to alternately hold the visor in the forward position, as illustrated in Figures 1 and 2, or release the primary visor for pivoting to a side window position, as illustrated in Figures 3-5. The bracket 40, like the bracket 30, also integrally includes a second cylindrical socket 41 which includes an opening facing (and aligned with) the keyed opening of the socket 32 of the bracket 30. The brackets 30 and 40 thus provide support for both the visors 10 and with the auxiliary visor 20 being positioned between the brackets 30 and 40 and pivoted between a raised, stored position, shown in Figures 1-3, and a lowered, use position, shown in Figures 4-5, through the pivotal couplings 34 and 44 as described below.

The auxiliary visor 20 of the preferred embodiment of the invention includes an outer visor housing 50 which slideably receives an auxiliary sliding panel 60 which can be moved from a stored position, illustrated in Figure 4, substantially coextensive and aligned with the housing 50 to an extended position illustrated in Figure 5 in which the auxiliary panel 60 extends immediately adjacent to the "A" pillar 11 of the vehicle, filling in the gap 21 shown in Figure 4. The construction of the auxiliary visor 20 comprising the housing 50 and the auxiliary sliding panel 60 will now be described in conjunction with Figures 6-10. Both the housing 50 and the sliding panel 60 are generally parallelogram-shaped, as seen in Figures 6 and 7, with interior acute angles of approximately 75° and opposite obtuse angles of approximately 105°. The housing and sliding panel are preferably integrally molded of an opaque polymeric material such as polycarbonate.

The housing 50 integrally includes, along its upper edge, a pivot rod 52 with spaced integral ribs 51 (Figure 6) terminating at opposite ends in a D-shaped cross section stub axle 53 which, as seen in Figure 10, fits within the keyed opening of a sleeve 46 of the coupling 44. The sleeve 46 is a resilient polymeric material having a D-shaped socket into which the D-shaped stub axle 53 is force-fitted. The sleeve 46 is molded onto the knurled end of a steel shaft 47. The end of the shaft 47 opposite the sleeve 46 includes an integral molded-on torque fitting which is keyed and fits into the keyed socket 42 of the mounting bracket 40. The couplings 34 and 44 are identical, and each include a steel shaft with a torque fitting at one end and a sleeve at the opposite end for mounting the auxiliary visor 20 between the sockets 32 and 42 of the brackets 30 and 40, respectively. This mounting arrangement of the pivot axle 52 of the housing 50 thus provides a predetermined controlled amount of torque for securely holding the auxiliary visor 20 in the stored, raised position, as illustrated in Figures 1-3, or selectively lowered, use position, as illustrated in Figures 4 and 5.

The housing 50 also includes a channel 55 extending along opposite edges and defined by upper and lower integral flanges 56, as best seen in Figures 6 and 8, which are spaced from the planar body 59 defining the housing. The flanges 56 are positioned near the opened right end for guidably supporting auxiliary sliding panel 60 therein. Adjacent the open end of the channel 55 at the upper and lower edges of the body 59 are stops 58 (Figures 6 and 8) which cooperate with resilient tabs 68 and with the sliding panel 60, as described below, for locking the sliding panel within the housing 50, once assembled. The left and upper and lower edges 54 of the body 59 communicating with the channel 55 are rolled around the flat parallelogram body 59 of the pannel 50 to provide a stop and guide for the panel 60 and a decorative appearance as well, as seen in Figures 2 and 3.

The auxiliary sliding panel 60 similarly has a parallelogram-shaped body which on one surface 69 includes three (3) parallel elongated raised sliding guides 67 with one guide on opposite upper and lower edges and a centre guide which provides anti-rattle guiding support for the panel 60 within the channel 55 of the panel 50. Thus, the guides 67 ride against the rear surface 57 (Figure 8) of the body 59 at spaced locations to permit relatively easy sliding action between the panel 60 and the housing 50 and yet prevent unnecessary movement therebetween. The panel 60, like housing 50, is parallelogram-shaped, having dimensions slightly smaller than the housing 50 so that it easily fits within the channel 55. The panel 60 can, in addition to the guide strips 67, be slightly warped along its longitudinal axis; i.e., when viewed from the top as seen in Figure 7, to provide also additional frictional engagement with the channel 55 of the housing 50 to control its positioning and sliding motion. A pair of inclined ramps 6l are integrally molded adjacent the opposite edges of the panel 60 near handle 62 to provide a tighter fit of the panel 60 in the housing 50. Thus, as the panel 60 is moved to a stored position, the effective thickness of the opposite edges of panel 60 is increased to wedge the panel in place when in a stored position.

Integrally formed and spaced along the upper and lower edges of the panel 60 are the resilient locking tabs 68 which extend slightly above the upper and lower edges of the panel 60, as seen in Figure 7, and, therefore, resiliently engage the floor 55' (Figure 8) of the channel 55 in a resiliently deflected configuration to prevent skewing of the panel 60 within the housing 50. The tips 65 of the resilient tabs or legs 68 are raked outwardly and away from the panel 60 and will engage the facing surfaces of the upper and lower stops 58 once the panel 60 is slid within the housing 50 a predetermined distance sufficient to fill the gap 2l (Figure 4) to prevent removal of the panel. Thus, the legs 68 serve not only as a sliding control for the panel 60 with respect to the housing 50, they also serve as stops preventing inadvertent removal of the sliding panel from the housing. The right edge of the panel 60, as best seen in Figure 7, includes a reinforced edge which defines a handle 62 which extends from the edge of housing 50, as best seen in Figure 4, to permit the panel 60 to be readily extended from the housing 50.

Once the primary visor l0 is lowered and moved to the side, as shown in Figure 3, the auxiliary visor 20 can be lowered from its stored position, as seen in Figures l-3, in which it is hidden behind visor l0 when also stored, to a lowered, use position as shown in Figure 4. The auxiliary visor panel 60 can be extended as necessary to fill the gap 2l between the visors l0 and 20 by grasping the handle 62 and extending the panel 60 as shown in Figure 5. Thus the use of the panel 60 effectively provides a variable-use auxiliary visor 20 which cooperates with the primary visor to block incident light from interferring with the driver's or passenger's vision. Although a passenger side installation is shown, it is understood that the driver's side installation is essentially the same with the parts reversed.

## Claims

1. A visor system (8) adapted to be mounted to the roof of a vehicle above the windshield to selectively provide sun-blocking protection for the front and for a side of a vehicle; the system comprising a first visor (10) mounted to a first mounting bracket (30) for pivotal movement between a raised stored position and selected lowered use positions along the windshield or a side window; a second visor (20), shorter than the first visor (10), and mounted for pivotal movement between a raised stored position and a lowered, sun-blocking position adjacent the windshield, the end edge of the second visor (20) nearest the first mounting bracket (30) being spaced from the bracket to permit the second visor (20) to be pivoted from its raised to its lowered position without fouling the first visor (10) when the first visor is along the side window; characterised in that the second visor (20) includes a housing (50) and an extension panel (60) slidably mounted to the housing and extendible from the said end edge at least far enough to bridge the gap (21), as it would be seen by a driver of the vehicle, between the second visor housing (50) and the edge of the first visor (10).

2. A visor system as claimed in Claim 1 in which the housing comprises a generally planar body (59) and a pair of spaced flanges (56) extending at least partially along opposite edges thereof to define channel means (55) at opposite sides of the body, the channel means including a floor portion (55') joining the flanges to the body, and the channel means slidably receiving the panel.

3. A visor system as claimed in Claim 2 in which the panel (60) includes at least one resilient arm (68) extending outwardly from an edge thereof and arranged to engage the floor portion (55') of the channel means (55).

4. A visor system as claimed in Claim 3 in which the panel (60) includes at least a pair of resilient arms (68) extending divergently outwardly from opposite edges of the panel and arranged to engage respective floor portions (55') of the channel means (55).

5. A visor system as claimed in Claim 3 or Claim 4 in which the channel means (55) includes stop means (58) extending upwardly from the floor portion (55') and arranged to engage the arm or arms (68) to prevent removal of the panel (60) from the housing (50).

6. A visor system as claimed in any one of Claims 1 to 5 in which the panel (60) includes at least one longitudinally-extending guide member (67) extending outwardly from a side (69) of the panel.

7. A visor system as claimed in Claim 6 in which the panel (60) includes at least a pair of parallel guide members (67).

8. A visor system as claimed in any one of Claims 1 to 7 in which the housing (50) and the panel (60) are each integrally moulded of a polymeric material.

9. A visor system as claimed in any one of the preceding claims in which the second visor (20) is mounted for pivotal movement between the first bracket (30) and a second bracket (40).

10. A visor system as claimed in Claim 9 in which the first bracket (30) includes a first socket for receiving a visor pivot member therein, the first visor (10) including a pivot member extending from an edge thereof, and the said member being pivotally coupled to the first socket for movement of the visor in a generally horizontal direction through an arc of substantially 90°.

11. A visor system as claimed in Claim 10 in which the first bracket (30) includes a second socket and the second bracket (40) includes socket means facing the second socket for receiving the second visor (20), the second visor having mounting means at opposite ends thereof which extend into the socket means and second socket.

12. A visor system as claimed in Claim 11 in which the mounting means includes a pair of axle stubs (53) at opposite edges of the second visor (20), the stubs being generally D-shaped in cross section, and attaching means (46) including a generally D-shaped aperture for slidably receiving the stubs.

## Patentansprüche

1. Sonnenblendensystem (8) zur Befestigung an dem Dach eines Fahrzeuges oberhalb der Windschutzscheibe, um Sonnenblendschutz wahlweise von vorn und einer Seite des Fahrzeuges zu ermöglichen, mit einer ersten Blende (10), welche an einer ersten Befestigungsschelle (30) zwischen einer angehobenen Lagerposition und einer nach unten bewegten gewählten Gebrauchsposition entlang der Windschutzscheibe oder einem Seitenfenster drehbar beweglich befestigt ist, und mit einer zweiten Blende (20), die kürzer als die erste Blende (10) ist und die zwischen einer angehobenen Lagerposition und einer unteren Sonnenblendenschutzposition nahe der Windschutzscheibe drehbar beweglich befestigt ist, wobei der Rand der zweiten Blende (20) nahe der ersten Befestigungsschelle (30) von der Befestigungsschelle beabstandet ist, um die Drehung der zweiten Blende (20) von ihrer angehobenen in ihre untere Position zuzulassen, ohne daß diese mit der ersten Blende (10) zusammenstößt, wenn sich die erste Blende entlang dem Seitenfenster befindet, dadurch gekennzeichnet, daß die zweite Blende (20) ein Gehäuse (50) und eine ausziehbare Platte (60) aufweist, welche an dem Gehäuse verschiebbar gelagert ist und von dem Rand wenigstens weit genug ausziehbar ist, um die Lücke (21), die sich, vom Fahrer des Fahrzeuges aus gesehen, zwischen dem Gehäuse (50) der zweiten Blende und dem Rand der ersten Blende (10) befindet, zu überbrücken.

2. Sonnenblendensystem nach Anspruch 1, dadurch gekennzeichnet, daß das Gehäuse einen im wesentlichen ebenen Körper (59) und ein Paar sich wenigstens teilweise entlang dessen gegenüberliegenden Rändern erstreckender, beabstandeter Flansche (56) aufweist, so daß an gegenüberliegenden Seiten des Körpers kanalförmige Elemente (55) mit einem Bodenbereich (55') gebildet sind, welcher die Flansche mit dem Körper verbindet, wobei die kanalförmigen Elemente (55) die Platte gleitbar aufnehmen.

3. Sonnenblendensystem nach Anspruch 2, dadurch gekennzeichnet, daß die Platte (60) wenigstens einen federnden Arm (68) aufweist, der sich von einem Rand nach auswärts erstreckt und derart angeordnet ist, daß er mit dem Bodenbereich (55') der kanalförmigen Einrichtung (55) in Eingriff steht.

4. Sonnenblendensystem nach Anspruch 3, dadurch gekennzeichnet, daß die Platte (60) wenigstens ein Paar federnder Arme (68) aufweist, die sich von gegenüberliegenden Rändern der Platte divergierend auswärts erstrecken und derart angeordnet sind, daß sie mit den entsprechenden Bodenbereichen (55') der kanalförmigen Einrichtung (55) in Eingriff sind.

5. Sonnenblendensystem nach Anspruch 3 oder 4, dadurch gekennzeichnet, daß die kanalförmigen Elemente (55) Begrenzungseinrichtungen (58) aufweisen, die sich vom Bodenbereich (55') nach oben erstrecken und derart angeordnet sind, daß sie mit dem Arm oder den Armen (68) in Eingriff sind, um ein Entfernen der Platte (60) aus dem Gehäuse (50) zu verhindern.

6. Sonnenblendensystem nach einem der Ansprüche 1 bis 5, dadurch gekennzeichnet, daß die Platte (60) wenigstens ein längsverlaufendes Führungselement (67) aufweist, welches sich von einer Seite (69) der Platte auswärts erstreckt.

7. Sonnenblendensystem nach Anspruch 6, dadurch gekennzeichnet, daß die Platte (60) wenigstens ein Paar parallele Führungselemente (67) aufweist.

8. Sonnenblendensystem nach einem der Ansprüche 1 bis 7, dadurch gekennzeichnet, daß das Gehäuse (50) und die Platte (60) jeweils einstückig aus einem Polymermaterial geformt sind.

9. Sonnenblendensystem nach einem der vorhergehenden Ansprüche, dadurch gekennzeichnet, daß die zweite Blende (20) zwischen der ersten Befestigungsschelle (30) und einer zweiten Befestigungsschelle (40) drehbar beweglich angeordnet ist.

10. Sonnenblendensystem nach Anspruch 9, dadurch gekennzeichnet, daß die erste Befestigungsschelle (30) einen ersten Sockel zur Aufnahme eines Blendendrehlagerelementes aufweist, und daß die erste Blende (10) ein Drehlagerelement aufweist, welches sich von einem Rand erstreckt und drehbar mit dem ersten Sockel verbunden ist, um die Blende in einer im wesentlichen horizontalen Richtung über einen Bogen von im wesentlichen 90° zu bewegen.

11. Sonnenblendensystem nach Anspruch 10, dadurch gekennzeichnet, daß die erste Befestigungsschelle (30) einen zweiten Sockel aufweist, und daß die zweite Befestigungsschelle (40) ein dem zweiten Sockel zugewandtes Sockelelement zur Aufnahme der zweiten Blende (20) aufweist, wobei die zweite Blende eine Befestigungseinrichtung an gegenüberliegenden Enden besitzt, welche sich in das Sockelelement und den zweiten Sockel erstreckt.

12. Sonnenblendensystem nach Anspruch 11, dadurch gekennzeichnet, daß die Befestigungseinrichtung ein Paar Achsschenkel (53) an gegenüberliegenden Rändern der zweiten Blende (20) mit im wesentlichen D-förmigem Querschnitt, sowie Befestigungseinrichtungen (46) mit einer im wesentlichen D-förmigen Öffnung zur gleitenden Aufnahme der Achsschenkel aufweist.

## Revendications

1. Système de pare-soleil (8) conçu pour être monté sur le pavillon d'un véhicule, au-dessus du pare-brise, pour assurer sélectivement une protection d'interception des rayons solaires pour l'avant et pour un côté d'un véhicule; le système comportant un premier pare-soleil (10) monté sur une première console de montage (30) de façon à pouvoir pivoter entre une position haute, de rangement, et une position basse, de service, sélectionnée, le long du pare-brise ou le long d'une fenêtre latérale; un second pare-soleil (20), plus court que le premier pare-soleil (10), monté pour effectuer un mouvement de pivotement entre une position haute, de rangement, et une position basse, d'interception des rayons solaires, près du pare-brise, le bord d'extrémité du second pare-soleil (20) le plus proche de la première console de montage (30) étant espacé de la console pour permettre au second pare-soleil (20) de pivoter, pour passer de sa position haute à sa position basse, sans interférer avec le premier pare-soleil (10) lorsque le premier pare-soleil se trouve le long de la fenêtre latérale; caractérisé en ce que le second pare-soleil (20) comporte un boîtier (50) et un panneau de prolongement (60) monté, avec liberté de coulissement, dans le boîtier et pouvant s'étendre, depuis ledit bord d'extrémité, au moins assez loin pour franchir le jeu (21) que verrait le conducteur d'un véhicule entre le boîtier (50) du second pare-soleil et le bord du premier pare-soleil (10).

2. Système de pare-soleil selon la revendication 1, dans lequel le boîtier comporte un corps (59) de forme généralement plane et une paire de rebords (56) espacés l'un de l'autre, s'étendant au moins partiellement le long de ses bords opposés, pour définir, des côtés opposés du corps, un canal (55), ce canal comprenant une portion de fond (55') qui réunit les rebords au corps, et les canaux recevant le panneau avec liberté de coulissement.

3. Système de pare-soleil selon la revendication 2, dans lequel le panneau (30) comporte au moins un bras élastique (68) qui s'étend à l'extérieur, depuis son bord, et qui est conçu pour venir en prise avec la portion de fond (55') du canal (55).

4. Système de pare-soleil selon la revendication 3, dans lequel le panneau (60) comporte au moins une paire de bras élastiques (68) qui s'étendent en divergeant, vers l'extérieur, depuis les bords opposés du panneau et qui sont conçus pour venir en prise avec les portions de fond respectives (55') des canaux (55).

5. Système de pare-soleil selon la revendication 3 ou la revendication 4, dans lequel les canaux (55) comportent des butées (58) qui s'étendent vers le haut depuis la portion de fond (55') et sont conçues pour venir en prise avec le bras ou les bras (68) pour empêcher que le panneau (60) se détache du boîtier (50).

6. Système de pare-soleil selon l'une quelconque des revendications 1 à 5, dans lequel le panneau (60) comporte au moins un élément de guidage (67) s'étendant longitudinalement et à l'extérieur depuis une face (69) du panneau.

7. Système de pare-soleil selon la revendication 6 dans lequel le panneau (60) comporte au moins une paire d'éléments parallèles de guidage (67).

8. Système de pare-soleil selon l'une quelconque des revendications 1 à 7, dans lequel le boîtier (50) et le panneau (60) sont chacun moulés, d'une seule pièce, en un matériau polymère.

9. Système de pare-soleil selon l'une quelconque des revendications précédentes, dans lequel le second pare-soleil (20) est monté pour pouvoir prendre un mouvement de pivotement entre la première console (30) et une seconde console (40).

10. Système de pare-soleil selon la revendication 9, dans lequel la première console (30) comporte un premier réceptacle pour recevoir un élément de pivotement du pare-soleil, le premier pare-soleil (10) comportant un élément de pivotement qui s'étend depuis l'un de ses bords, et ledit élément étant couplé, avec liberté de pivotement, au premier réceptacle pour permettre le mouvement du pare-soleil dans une direction légèrement horizontale et sur un arc de sensiblement 90°.

11. Système de pare-soleil selon la revendication 10, dans lequel la première console (30) comporte un second réceptacle et dans lequel la seconde console (40) comporte un moyen formant réceptacle, faisant face à ce second réceptacle, pour recevoir le second pare-soleil (20), le second pare-soleil présentant, à ses extrémités opposées, des moyens de montage qui s'étendent dans le moyen formant réceptacle et dans le second réceptacle.

12. Système de pare-soleil selon la revendication 11, dans lequel les moyens de montage comportent une paire d'embouts (53) aux bords opposés du second pare-soleil (20), les embouts ayant de façon générale une section droite en forme de D, et des moyens de fixation (46) présentant une ouverture de forme générale en D pour recevoir les embouts avec liberté de coulissement.

FIG 1

FIG 2

FIG 3

FIG 4

FIG 5

FIG 7

FIG 6

FIG 9

FIG 8

FIG 10